Europäisches Patentamt

European Patent Office

Office européen des brevets

(11) Publication number: **0 258 931**
A2

# (12) EUROPEAN PATENT APPLICATION

(21) Application number: 87201579.7

(22) Date of filing: 21.08.87

(51) Int. Cl.³: **G 05 D 1/03**

(30) Priority: 04.09.86 BE 217126

(43) Date of publication of application:
09.03.88 Bulletin 88/10

(84) Designated Contracting States:
DE ES FR IT NL

(71) Applicant: "Bitumar", naamloze vennotschap
Scheldedijk, 30
B-2730 Zwijndrecht(BE)

(72) Inventor: Bernaers, Greet
Leerwijk 28
B-2030 Antwerpen(BE)

(74) Representative: Pieraerts, Jacques et al,
Bureau Gevers S.A. rue de Livourne 7 bte 1
B-1050 Bruxelles(BE)

(54) Method for determining the position of underwater-lying objects relative to an underwater-movable apparatus.

(57) There is enclosed in the underwater-lying object, an electricity conductor (6), a voltage is applied to said conductor (6), and there is coupled to the underwater-movable apparatus (1), a receiver or sensor (10) which can detect the presence and the relative position of said conductor (6), and the movable apparatus (1) is remotely controlled according to the information provided by said receiver or sensor (10).

Fig.2.

EP 0 258 931 A2

This invention relates to a method for determining the position of underwater-lying objects relative to an underwater-movable apparatus.

In the following specification, the wording "underwater-lying objects" may have the most varied meanings. Bottom-protecting materials, wrecks, anchors, structural works, all fall within the meaning of "underwater-lying objects".

When setting or laying a covering underwater, on the bottom of a basin, use may be made of prefabricated mats, or else the material may also be dumped on the bottom.

In the first case, the mats should join accurately with one another, while in the second case, that is when dumping materials, this has to occur also with the highest accuracy. In some cases, the joint which is formed between the mats or similar sunk mattresses, has to be filled. Detecting objects dwelling underwater or finding back previously laid or sunken parts are also problems wherefor the method and equipment according to the invention may find an application.

Up to now, such various operations could only be performed by means of depth-plotting, use of sound waves, photographic methods, etc. Many such methods have but a limited accuracy at deep depths. In many cases, it was also necessary to work with divers.

The invention has now for object to design a method and an equipment which make it possible even in polluted waters with limited visibility, to determine with a high accuracy the position of underwater-dwelling objects or objects to be arranged underwater. The invention has also for object to allow performing some works underwater due to an accurate knowledge of the location of the various elements and the relative position thereof, either relative to one another or relative to elements still to be brought in or works to be performed.

To obtain this according to the invention, there is enclosed in the underwater-lying object, a conductor, a voltage is applied to said conductor, and there is coupled to the underwater-movable apparatus, a receiver or sensor which can detect the presence and the relative position of said conductor, and the movable apparatus is remotely controlled according to the information provided by said receiver or sensor.

The invention further pertains to an equipment for remotely determining, generally from the surface, the position of underwater-dwelling objects relative to a movable apparatus dwelling or located underwater, as well as relative to objects such as structural elements which lie underwater or are intended to lie underwater, and which are fitted with an equipment according to the invention.

Other details and advantages of the invention will stand out from the following description of a method for determining the position of underwater-lying objects, of the equipment being used thereby and of objects which are intended to be used with such equipment and according to said method. This description is only given by way of non limitative example and with reference to the accompanying drawings, in which:

Figure 1 is a simplified diagrammatic showing of the method according to the invention, whereby the joint between two sunk mattresses should be determined.

Figure 2 shows on a larger scale, a cross-section through two sunk mattresses the joint between both components of which should be filled.

Figure 3 is a diagrammatic showing of two sunk mattresses the first one of which already lies on a basin bottom, while the other one is being sunk from the surface and should connect closely with the first sunk mattress.

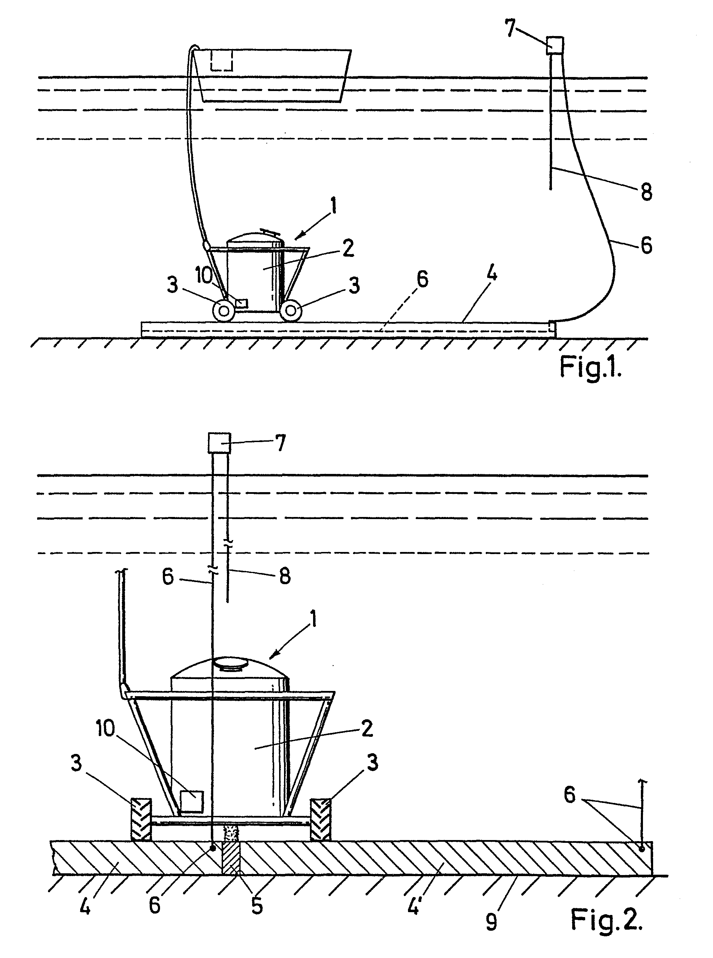

A description will be first given of the method for the application figures 1 and 2 refer to, that is filling up a joint between two sunk mattresses lying on a basin bottom. Said sunk mattresses may be mineral asphalt mats, but it is clear that the method may also be applied to every underwater-dwelling structures, whatever be the shape or composition thereof. In the description as given hereby of the method with reference to figures 1 and 2, the underwater-movable apparatus is formed by the device as disclosed in Belgian Patent Application PV O/216,446 in the name of the Applicant. The underwater-movable apparatus is then likewise formed by a carriage 1 which can be moved along the basin bottom, which is fitted with a tank 2 for dumping material, for example but not exclusively bituminous asphaltic mastic. Such a carriage is fitted with wheels 3 and is thus movable, as clearly and widely described in said Patent Application, along the bottom over or adjacent sunk mattresses which are laid over a basin bottom and wherebetween a joint remains, which should be filled with dumped material. In figures 1 and 2, such sunk mattresses are shown with reference numerals 4 and 4'. Between said sunk mattresses 4 and 4', said joint 5 will be noticed. Into each sunk mattress, an insulated electricity conductor 6 is embedded or joined thereto. Said electricity conductor 6 is fed by a current source 7. Said current source may be located some distance away or be embedded in the sunk mattress. To the other terminal of current source 7 there is connected a conductor 8 which forms a closed circuit through the water with electricity conductor 6.

There is noticed in figure 2 both sunk mattresses 4 and 4' laid next to one another over the bottom 9 from a basin.

The already-mentioned joint 5 will be noticed between the sunk mattresses 4 and 4'.

Guiding carriage 1 occurs remotely by acting on those means which drive carriage 1 and steer the wheels thereof, as disclosed in said Applicant's Patent Application.

The carriage 1 which is designed to dump a liquid, semi-liquid or bituminous mass in joint 5, may thus be guided to the accurate location and over the accurate distance by processing in the remotely-controlled device, those data which at least one sensor 10 the carriage is fitted with, sends out. Such data are sensed due to the changes which appear in the spacing between said sensor 10 and conductor 6. The carriage the design and operation of which are disclosed in the above-mentioned Patent Application, may thus be remotely guided with the tank 2 thereof accurately above joint 5. The carriage 1 fulfills here the definition "underwater-movable apparatus".

The same definition is also fulfilled by a laying frame 11 (shown diagrammatically), as disclosed in Belgian Patent Application PV O/217114, also in the name of the Applicant.

The sunk mattress 4' is laid down correctly parallel and next to the first sunk mattress, for example with the use of a laying frame.

On the laying frame 11 there is provided also at least one sensor 10 which can send out data to the remote-control device for said laying frame.

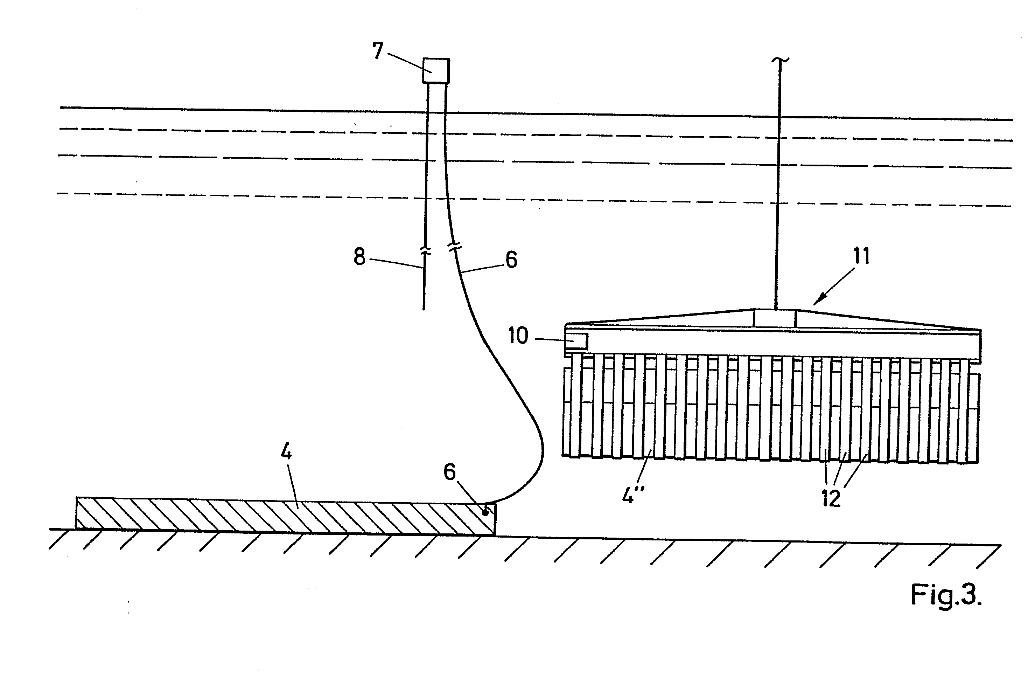

There is again noticed in figure 3, a sunk mattress 4 fitted with a conductor 6, a current source 7 and a conductor 8. When lowering laying frame 11 with the sunk mattress 4", the required data are sent by that sensor 10 the laying frame is fitted with, to the remote-control device. Such data reflect the relative position of the laying frame and thus of sunk mattress 4" with respect to sunk mattress 4 already located on the bottom.

To avoid overloading needlessy the drawings, the laying frame has been shown but very diagrammatically. The strips or belts which retain the sunk mattress 4" hanging from laying frame 11, are shown with reference numeral 12. When lowering laying frame 11, the sunk mattress bears in a curved shape on said belts 12.

In view of the function being fulfilled here by said laying frame 11, it may also be considered as "underwater-movable apparatus". This definition thus encloses laying frame 11, carriage 1, but also any other underwater-movable object which is fitted with a sensor. The carriage 1 as well as the laying frame 11 are moved or displaced underwater up to the suitable position thereof relative to a sunk mattress already bearing on the basin bottom. By means of the equipment according to the invention, this may occur accurately.

Even if mention has been made here by way of example of that problem whereby a joint between two sunk mattresses has to be filled, or the accurate location of one sunk mattress relative to another one is determined, it is clear that the method and the equipment used thereby can find many other applications.

For instance, it is clear that the method and the equipment used thereby also make possible detecting concealed structures or structures lying on the ground. The laying underwater of materials or structures in a well-determined location relative to structures, materials or objects which lie on the bottom, may be performed by means of the method and the equipment used thereby.

It appears clearly from the above description of the method and the equipment used thereby, that the position of an underwater-dwelling structure which is fitted with an electricity conductor whereto an AC voltage is impressed, may be detected with the aerial of the receiver or sensor. The receiver or sensor does indeed send out a signal which shows the relative position said aerial has in relation to the electrically-live wire. A maximum signal is received when the aerial lies closest to said wire. As the aerial moves away from the wire, the signal being received will also become weaker. In practice, at least two aerials or sensors will be provided one behind the other on the movable apparatus, as considered along the apparatus movement direction, in such a way that it will be remotely possible to determine whether the object to be lowered (a sunk mattress for example) comes nearer or past that location it should be laid on.

It is clear that the invention is in no way limited to the above-described embodiment and that many changes may be brought therein without departing from the scope of the invention.

## CLAIMS

1.  Method for determining the position of underwater-lying objects relative to an underwater-movable apparatus (1), characterized in that there is enclosed in the underwater-lying object, an electricity conductor (6), a voltage is applied to said conductor (6), and there is coupled to the underwater-movable apparatus (1), a receiver or sensor (10) which can detect the presence and the relative position of said conductor (6), and the movable apparatus (1) is remotely controlled according to the information provided by said receiver or sensor (10).

2.  Method as defined in claim 1, characterized in that an AC voltage with a pre-determined frequency is impressed to said conductor (6).

3.  Method as defined in either one of claims 1 and 2, characterized in that said movable apparatus (1) and the receiver and sensor (10) thereof are connected by a cable to a remote-control device.

4.  Method as defined in any one of claims 1 to 3, characterized in that an insulated electricity conductor (6) and the current source thereof (7) are built into the object (4,4') lying underwater before locating same in position, for example when manufacturing said object (4,4').

5.  Method as defined in any one of claims 1 to 3, characterized in that an insulated electricity conductor (6) and the current source thereof (7) are arranged on objects (4,4') already dwelling underwater in a well-determined relative position, for example with the help of a diver.

6.  Equipment for remotely determining, mainly from the surface, the position of underwater-dwelling objects (4,4') relative to an underwater-dwelling or underwater-arranged movable apparatus (1), notably for the working of the method as defined in any one of claims 1 to 5, characterized in that it comprises an insulated electricity conductor (6) which is connected to a current source (7), which conductor (6) is arranged on or in the underwater-dwelling objects (4,4'), in a well-determined position relative to said objects (4,4'), an underwater-movable apparatus (1) which is fitted with a receiver or sensor (10) which can sense the presence and the relative position of said live conductor (6), and a remotely-controlled device which is connected to said movable apparatus (1) and which receives the information provided by said receiver or sensor (10).

7. Equipment as defined in claim 6, characterized in that said insulated conductor (6) is connected to an AC source (7) with a pre-determined frequency.

8. Equipment as defined in either one of claims 6 and 7, characterized in that said movable, underwater-dwelling apparatus (1) is connected by a cable to the remote-control device lying on the surface.

9. Underwater-dwelling objects, such as structural elements the position of which should be determined afterwards by means of a method or with an equipment as defined in any one of claims 1 to 8, characterized in that an insulated electricity conductor (6) is arranged on or embedded in said objects (4,4'), which conductor lies in a well-determined position relative to said object (4,4'), and can be connected to a current source (7).

Fig.1.

Fig.2.

Fig.3.

0258931